# EUROPEAN PATENT APPLICATION

(11) **EP 1 978 466 A1**
(43) Date of publication of application: **08.10.2008**
(21) Application number: 07251528.1
(22) Date of filing: 05.04.2007
(51) Int. Cl.: G06F 21/22

(54) **Integrated circuit and method for secure execution of software**

(71) Applicant: STMicroelectronics (Research & Development) Limited, Marlow, Buckinghamshire SL7 1YL (GB)
(72) Inventor: Bennett, Peter, Bristol, BS48 4Q8 (GB); Homewood, Mark, Winscoombe, (North Somerset) BS25 1NH (GB); Dellow, Andrew, Gloucester, GL6 9JG (GB)
(74) Representative: Loveless, Ian Mark

(57) **Abstract**

A method and circuit for processing instruction code allows code to be written in a form that is executable but includes various markers arranged such that a security process in the form of a script can be run on the code to render at least portions of the code non-executable until a corresponding process is run to re-render the code into executable form. This allows the code to be written in a generic form and then personalised to particular circuits having an appropriate secret to allow the code to be descrambled, decrypted or otherwise rendered executable.

## Description

### FIELD OF THE INVENTION

The present invention relates to semiconductor integrated circuits for use in devices where it is desirable to prevent unauthorised manufacture of copies of those devices and use code intended for a different device.

### BACKGROUND OF THE INVENTION

In conditional access devices for pay television, or any other device using memory and requiring security, there is a need to prevent cloning. Cloning in this sense is the unauthorised use of copied code on hardware on which it was not intended that the code should be run.

Semiconductor integrated circuits, conveniently referred to below simply as 'circuits', are ubiquitous in modern electronic devices including mobile telephones, pay-television systems, and many other widely used devices. One problem faced by manufacturers of these kinds of devices is that unscrupulous traders attempt to manufacturer and sell illegitimate copies of such devices, drawing valuable custom away from the legitimate device manufacturer. Legitimate device manufacturers typically purchase circuits from another party and assemble them according to their own design. Copying of electronic devices by illegitimate parties, known as cloning, is achieved by obtaining the necessary components including integrated circuits and assembling them into an exact copy of the physical circuit board of the device manufacturer, thereby creating an unauthorised copy of the whole device. The software from the original device, executed by a circuit in the device allowing the device to function, is then copied to the cloned device.

A solution to this problem is for the device manufacture to use software that is unique to themselves and for the manufacturer of the circuits to provide circuits that will properly execute only the software of that particular device manufacturer. Such an arrangement may be described as providing a circuit that is personalised to a device manufacturer's unique software. In this scheme, different device manufacturers use different software and so require circuits that are personalised to that different software. In this way, so long as the circuit manufacturer supplies circuits personalised to a particular device manufacturer's software only to that device manufacturer, cloning of devices is prevented. This is because when an illegitimate party constructs a copy of a legitimate device and copies the software from that device, the circuit comprised in the copied device would not be correctly personalised to the copied software. This is because correctly personalised circuits would only be supplied to the legitimate device manufacturer and the illegitimate party would therefore not be able to obtain them.

One problem with this approach is that the manufacture of a different circuit design type is required for each end device manufacturer. This involves the time consuming process of testing each separate circuit type at the manufacturing stage and the logistical difficulty in distributing the appropriate circuit to each device manufacturer.

We have appreciated the need to provide both integrated circuits and software arranged such that software intended for certain types of circuit is only allowed to execute on those types of circuit. We have further appreciated that this need should be met whilst minimising the need to design different circuits or the need for writing different software for different devices.

### SUMMARY OF THE INVENTION

The invention is defined in the claims to which reference is now directed. An embodiment of the invention is a conditional access device known as a set top box. The integrated circuit within the set top box includes a security feature that detects markers within code so as to selectively process portions of code to render them executable from a stored non-executable form (such as encrypted or obfuscated). Code can be rendered executable only by certain circuit "sales types". This prevents the code from executing on a circuit of a different "sales type" that does not have the appropriate security feature to render the code executable.

Advantageously, the code can be written in a normal form that can be executed on a circuit without the security features (a generic "sales type"). After linking the code, a security script can be run that renders portions of the code marked with appropriate markers unusable until processed by appropriate security hardware in a circuit. Such portions may be encrypted, obfuscated or otherwise processed such that they cannot be executed in that form. The markers are selected to be instructions such as redundant nulls or other redundant portions of code. This allows the code prior to application of the security script to be executed on any appropriate circuit. Accordingly, the software code itself does not need to be written specifically for particular circuits, rather the process of rendering the code executable only by certain types of circuit is by operation of the security script. The code may thus be quickly and easily render executable only by selected types of circuit.

### BRIEF DESCRIPTION OF THE FIGURES

An embodiment of the invention will now be described by way of example only and with reference to the figures in which:
Figure 1: shows the main components of a known conditional access device such as a set-top-box that may embody the invention;
Figure 2: shows the detail of an integrated circuit embodying the invention;

### DESCRIPTION OF A PREFERRED EMBODIMENT

The invention may be embodied in an integrated circuit used in a variety of different devices used for multiple purpose applications. The preferred embodying device is a conditional access unit commonly referred to as a "set top box", that is a device that provides access to broadcast services, such as television, only if various conditions are met. Other devices in which the integrated circuit embodying the invention may be used include audio and video players such as DVD, MP3 and other format players, broadcast receivers and in general any device requiring security such that code cannot be copied and run on the device.

The main application of the embodying integrated circuit is to decode conditional access broadcast signals. A wide variety of techniques for broadcast transmission are known in which the broadcast signal is encoded, scrambled or encrypted in some way to allow only authorised recipients to retrieve the original signal. One particular field in which this area has been researched is broadcast television.

The broadcast of television signals in which only permitted or authorised recipients can produce the clear television picture from those signals is known as Conditional Access Television or Pay-TV. In this context, broadcast can include over-air, via satellite, by cable or indeed any appropriate distribution medium in which the same signal content is sent to many recipients. Television signals may be analogue signals or digital signals. The term "scrambling" is often used for the process of rendering analogue signals unusable until "descrambled", whereas the terms "encryption" and "decryption" are more often used for digital signals. In either case, the aim is to only allow users that have paid a subscription to descramble/decrypt the signals.

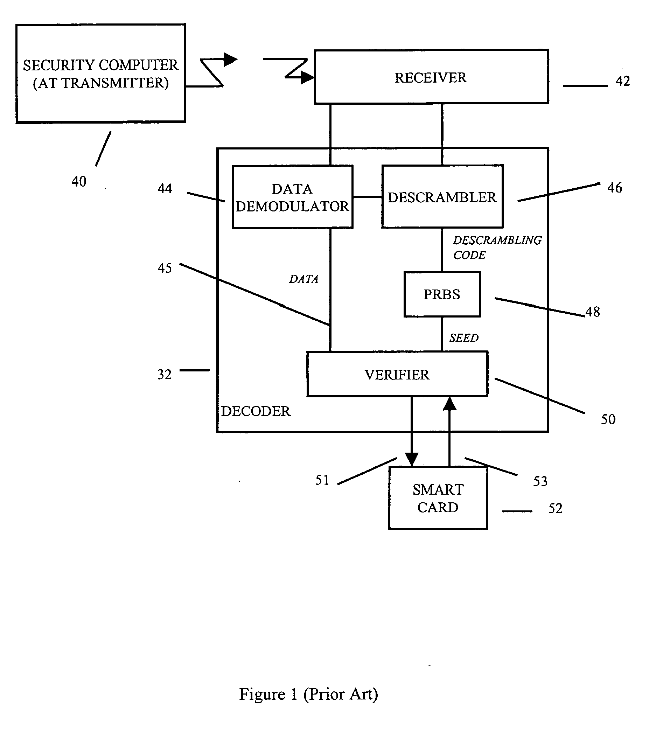

A known system and receiver in which the invention may be embodied is illustrated in Figure 1. The concept in this system is to broadcast signals (by cable) which can be received by anyone, but only rendered usable by recipients having a "set top box" decoder 32 and an associated smart card 52. The decoders 32 of all recipients are identical, but the smart cards 52 contain unique secrets, including entitlements, which specify which channels within the broadcast signals the user is permitted to watch. The system operates broadly as follows.

A television signal is broadcast over air in a scrambled form from a transmitter 40 and includes a stream of control data describing how the television signal is to be descrambled. The television signals and control data are necessarily the same signal sent to all users. It is not feasible to send the signals uniquely scrambled/encrypted to each recipient as there may be tens of millions of users and this would require tens of millions of times the bandwidth. Accordingly, all recipients must be able to operate the same descrambling/decryption process. This is implemented in the decoder 32, which receives the broadcast signals from a receiver 42. A data demodulator 44 extracts the portion of the signal for picture and/or sound and provides this to a descrambler 46 for descrambling. The control data portion is extracted and provided to a verifier 50 over line 45. The control data comprises encrypted control words, which are needed to instruct the descrambler how to descramble the picture/sound signal. The control words must therefore be decrypted, and it is for this purpose that the smart card 52 is provided.

The verifier 50 provides encrypted control words across an interface along line 51 to the smart card 52. The smart card 52 contains an algorithm, which, if the user is entitled to watch the chosen channel, decrypts the control words and provides them to the verifier 50 via line 53. The verifier passes the decrypted control words to a PRBS 48, which in turn provides a descrambling code to the descrambler. It should be noted that the control words and hence the descrambling code change frequently (every few seconds). The security in this arrangement is thus that it is not feasible to try and decrypt the control words in real time without the smart card algorithm. Also, in the event that the smart card algorithm is compromised, then the smart cards themselves can be re-issued to all subscribers. Lastly, to view any channels, a user must pay for "entitlements" which are broadcast over air addressed uniquely to each user and stored in the smart card 52. The conditional access security is provided in the circuit described by the verifier integrated circuit 50.

In the manufacture of such set top boxes, the security features of the verifier are provided by an integrated circuit. There are two principal versions of set top box: so called "freeview" devices that are able only to receive and process certain television channels, and conditional access set top boxes that require a user to have particular rights to view given television channels. In both such versions of device, software code is executed by the integrated circuit that implements the security features. In addition, each set top box manufacturer will have their own type of software code to be executed. However, this code should only be executable on the integrated circuits supplied to that manufacturer and not on integrated circuits supplied to other manufacturers or, importantly, on "freeview" boxes.

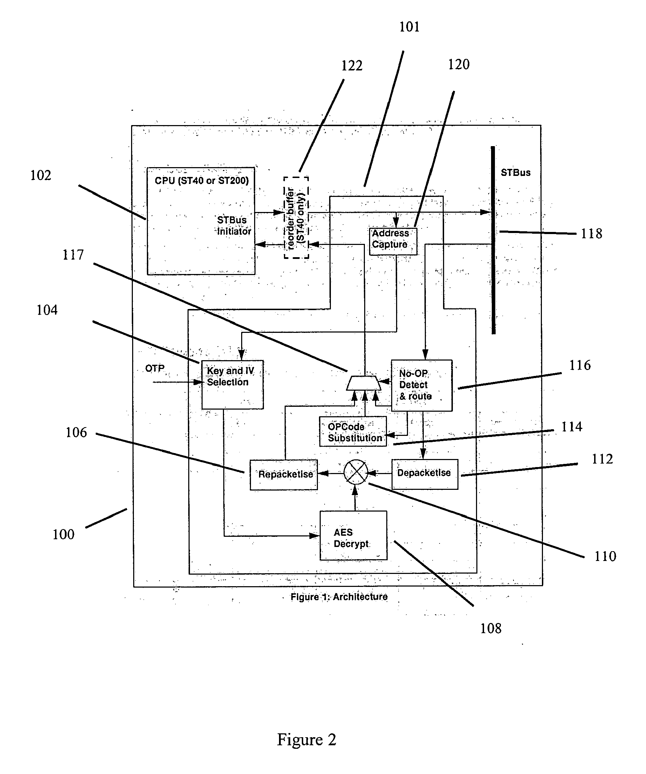

The embodiment of the invention comprises an integrated circuit that only allows "types" of code that have been processed to provide security features to be executed. The circuit may be implemented as part of the verifier circuit 50 described in Figure 1 and an example integrated circuit 100 embodying the invention is shown in Figure 2.

To take advantage of the security features provided by the integrated circuit 100, code must first be written that can be executed on the type of circuit (and importantly can also be executed on other circuits until operation of a security process or script). The fact that the code can be initially executed on circuits without security hardware is important for initial testing and development of the code. In addition, the fact that the code does not initially need to be written specifically for any given circuit simplifies the writing and testing of the code. The code, which is initially unencrypted, is written with specific 'marker' instructions inserted into the code at locations that require protection. Such marker instructions may be "null" or logically redundant instructions such as "OR with zero" or "add 5 take 5" such that they have no effect when executing the unencrypted code. These markers are also referred to as "no-op" instructions. Importantly, the marker instructions also do not stand out and so a hacker would have difficulty in determining which sections of code are marked. The marker instructions indicate to a subsequent process or script which sections of the code are to be rendered un-executable by encryption or obfuscation.

A post compilation script, which may be referred to as a security script or security process, is then operated on the code to parse the image for these null instructions, substitute one of many 'encrypt' or 'anticloning' null instructions, and encrypt the cache line according to the rules associated with the chosen instruction. After processing by the security script, the code can only then execute on appropriate hardware that has the functionality necessary to render executable the encrypted (or otherwise obfuscated) portions of code. Prior to the security script the code may thus be executed on circuits with or without (such as for use in freeview boxes) security hardware, but after operation of the security script the code can only executed on circuits of particular sales types with the correct security hardware settings.

The circuit 100 embodying the invention comprises hardware features such that the circuit is allowed to run the previously partially encrypted or obfuscated code. The circuit comprises a security block 101 that sits on the instruction fetch bus of the circuit core and selectively decrypts cache refills on detection of certain null instructions. As previously explained, by making keys for this decryption available only in specific sales types of the circuit, code can be prevented from running on sales types other than the one intended, and thus prevent software cloning on generic circuits (such as used in freeview boxes).

The security block 101 is coupled to the bus 118 via which the CPU 102 fetches instruction code from external memory (not shown). On a cache read request from the CPU 102, the address capture block 120 will latch the address and pass this information to the Key and IV (initial value) processing block 104. This block creates an address dependent IV (initial value) and causes the AES engine 108 to decrypt this initial value using a key selected by OTP (one time programmable memory or register). The AES is configured in CFB mode to create an XOR stream 32 bytes long. This is always created at maximum speed to ensure for static code decryption, the decryption data is available when the return packet is received. In CFB mode the previous ciphertext block is encrypted and the output produced is combined with the plaintext block using exclusive-OR to produce the current ciphertext block. It is possible to define CFB mode so it uses feedback that is less than one full data block. The initial value is used as a "seed" for the process.

On the 1 st return cell of the cache refill a detection unit referred to as the NO-OP detect and route block 116 will check the 1^{st} instruction and compare it against a lookup table. If this instruction is not a specific anticloning marker then this and the subsequent cells are routed directly back to the CPU via multiplexer 117. If the instruction detected is a specific anticloning marker (a specific no-op, not ordinarily generated by the compiler such as XOR A with 0 and write to A), then the cell and the subsequent cells for that bus opcode are processed according to which type of marker was detected. The processing is undertaken by a security unit comprising the following elements: depacketise unit 112, opcode substitution unit 114, XOR unit 110, AES decryption block 108 and repacketise block 106. The types of marker are set out below.

Stype marker: this is used for Static Code (that is code that is kept at a known address). If this marker is detected the circuit decrypts the n bytes of the cache line. The cells are depacketised in depacketise unit 112 ready for XOR decryption. An XOR decryption stream is computed by AES engine 108 from a combination of an initial value, key from key block 104 and the pre-captured address value and is then XOR'ed in XOR unit 110 with the encrypted part of the cache line. The XOR stream thus differs for each portion of code. This process recovers the executable portion of code. The plain text code is then repacketised is depacketise block 106. These cells are then sent to the CPU for execution. The S type marker can be an unused NO-OP as even if known and detected, the cache line still has to be completely rewritten from scratch.

Dtype marker: this is for Dynamic Code (that is code for which the address may change). Because the code address is not fixed, the address cannot be used as part of the decryption scheme. However, it is still desired that the 128 bit XOR streams differ and so the marker instruction itself can contain a key. If this marker is detected the circuit decrypts the n bytes of the cache line. The cells are depacketised in depacketise unit 112 ready for XOR decryption. The XOR decryption stream computed from the pre-captured address value cannot be used because the decryption is independent of the address. Data contained within the D Type marker instruction is sent to the IV and key processing block 104 and this creates a cache line specific IV (initial value), and causes the AES engine 108 to decrypt this using a key selected by a combination of OTP and the data within the D type marker itself. The AES is configured in CFB mode to create an XOR stream 32 bytes long. This is then XOR'ed with the encrypted part of the cache line, and the plain text is then repacketised. These cells are then sent to the CPU for execution. The D type marker can be an unused NO-OP with some associated data as even if known and detected, the cache line still has to be completely rewritten from scratch.

Mtype marker: this is for Malicious Cache line code. The purpose is to hide malicious code that causes a reset or other impairment to functioning of the circuit, but for the security block 101 to recognise this code and avoid passing it to the CPU. The security block substitutes the code with a NO-OP. The entire cache line is substituted for No-OPs and returned to the CPU for execution. To obfuscate the M type marker, multiple, common instructions should be used (for instance ADD 5 to A immediately followed by SUB 5 from A).

Ptype marker: this is for Permuted Cache Line code. This case causes the circuit to perform an opposite function or to substitute n for a permuted code. The cells are depacketised in depacketise unit 112 and then data contained within the Mtype marker instruction is sent to the substitution block 114. Depending on the data contained in this instruction, the substitution block will substitute Opcodes for those in the cache line, for instance replace ADD with SUB. To obfuscate the Ptype marker, multiple common instructions should be used (for instance ADD 5 to A immediately followed by SUB 5 from A).

The marker types discussed above have the common feature of causing the circuit to perform an operation other than simply executing the code indicated by the marker. The broad categories being to: decrypt the portion of code, render clear obfuscated code, execute an opposite of the code or swap the code for different code. The common concept being the fact that the code cannot simply be executed and that the function indicated by the marker must be performed.

The preferred choice is to use an encryption scheme. For each "sales type" (that is the circuits of a particular type supplied to one manufacturer) a OTP (one time programmable) store can set an 8 bit value that is input into the key and IV block 104. This creates a specific AES key. This is done at reset by decrypting this 8 bit value padded with a fixed tied value using a fixed tied AES key. This AES key is used for all anticloning decryption stream generation.

The IV (initial value) for the Stype markers CFB operation is created from the 32bit address of the fetched code by padding it to 128 bits with a static tied value. The IV for the Dtype marker CFB operation is created from the Dtype instruction additional data by padding it to 128 bits with a static tied value.

The post compilation script performs the function of locating null instructions in the plain binary code and inserting the anticloning marker instructions and processing the rest of the cache line appropriately. The script will take as its input the binary code, address data (for static code) and the AES key that the device will produce given a particular sales type OTP setting (rather than the OTP setting itself the script will NOT contain the tied value used to create the key.) The compiler is then forced to insert non standard no-ops (the markers) at the required, aligned locations in the binary code, for the script to process correctly. Thus each S,D,M and P marker to be inserted in the code will have another corresponding marker that the script detects and uses. The markers embedded in the plain code should be different to those inserted by the script (and hence detected by the anticloning block 101) to allow a circuit with the block 101 enabled to run code prior to script processing and post script processing.

Performance and Security considerations: The time taken to detect and forward non anticloning packets shall be kept to an absolute minimum ideally one packet. The cost for the four anticloning processing techniques should also be kept to a minimum. It is expected that S, P and M markers should all add less than 10 additional cycles to the cache latency. D markers may add up to 30 cycles to the latency. For this scheme to work on an unmodified circuit, a reorder buffer is required to ensure that the cache lines are fetched and process in order. This will also have a performance impact therefore in devices where this anticloning IP is not required, it should be possible to completely bypass this buffer and this IP. The performance impact of this can be minimised by substituting the 1 st LD 32 address to be the cache aligned, and then increment; the return data will take at least 1 additional cycle if the required word is word 2,2 additional cycles if it is word 3 and three additional cycles if it is word 4, therefore the average is at least 1.5 additional cycles, assuming the DDR and bus return all the cells of the request back to back. This will represent a refill performance impact of around 10 on a typical system.

## Claims

1. A method of processing instruction code so as to prevent the code from being properly executable on integrated circuits other than those having appropriate security hardware, comprising:
- providing instruction code in a form executable on an integrated circuit, the code including one or more code markers arranged to indicate portions of code to be altered, the code markers having substantially no effect on the execution of the instruction code;
- operating a security process on the instruction code to search for the code markers, to identify the indicated portions of code to be altered and to alter the portions of code such that the code cannot be properly executed on integrated circuits other than those having appropriate security hardware.

2. A method according to claim 1, wherein the security process inserts corresponding security markers at locations identified by the code markers, the security markers indicating the location of the portions of code that have been altered.

3. A method according to claim 1 or 2, wherein the security process alters the portions of code by encrypting according to an encryption scheme.

4. A method according to claim 3, wherein the encryption scheme includes a function of the address of the code portions.

5. A method according to claim 3, wherein the security process inserts corresponding security markers and the encryption scheme includes a function of data in the security markers.

6. A method according to claim 1, wherein the security process alters the one or more portions of code such the portions of code are operable to impair the functioning of an integrated circuit.

7. A method according to claim 6, wherein the functioning is impaired by causing a chip reset.

8. An integrated circuit having a processor and a security block operable to allow code having appropriate security markers and code portions to execute but to deny code having inappropriate security markers and code portions to execute, the security block comprising:
- a detection unit arranged to detect security markers in code portions fetched by the processor for execution; and
- a security function arranged to render the code executable by action in relation to the code portions indicated by the security markers.

9. An integrated circuit according to claim 8, wherein the security function comprises decrypting the code portions.

10. An integrated circuit according to claim 8, wherein the security function comprises swapping the code portions for alternative code portions.

11. A multi-media device comprising an integrated circuit according to claim 8, 9 or 10.

12. A conditional access device comprising an integrated circuit according to claim 8, 9 or 10.
